(19) Europäisches Patentamt
European Patent Office
Office européen des brevets

(11) Publication number: **0 389 768 A2**

(12) **EUROPEAN PATENT APPLICATION**

(21) Application number: **90102681.5**

(22) Date of filing: **12.02.90**

(51) Int. Cl.$^5$: **C08K 13/02, C08L 75/04, //(C08K13/02,3:22,3:32,5:16)**

(30) Priority: **29.03.89 IT 1994189**

(43) Date of publication of application: **03.10.90 Bulletin 90/40**

(84) Designated Contracting States: **AT BE CH DE FR GB LI NL SE**

(71) Applicant: **V.A.M.P. S.r.l.**
**Viale Teodorico, 19/2**
**I-20149 Milano MI(IT)**

(72) Inventor: **Scarso, Luciano**
**Viale Teodorico, 19/2**
**I-20149 Milano MI(IT)**

(74) Representative: **Trupiano, Roberto**
**BREVETTI EUROPA S.r.l. Piazza Bernini, 6**
**I-20133 Milano (MI)(IT)**

(54) **Flame-retardant and smoke-suppressant composition for polymers and so-obtained polymeric materials.**

(57) Flame-retardant and smoke-suppressant composition for polyurethane polymers and polyurethane-based materials in general, comprising A) an ammonium phosphate and/or one or more amine phosphate(s); B) one or more nitrogen-containing organic compound(s); and C) magnesium hydroxide and/or aluminum hydroxide. Polyurethane polymers and polyurethane-based materials endowed with flame-retardant and smoke-suppressant characteristics by means of said composition.

EP 0 389 768 A2

# FLAME-RETARDANT AND SMOKE-SUPPRESSANT COMPOSITION FOR POLYMERS AND SO-OBTAINED POLYMERIC MATERIALS

The present invention relates to a flame-retardant and smoke-suppressant composition for polyurethane polymers, which composition, in other terms, combines with the property of being flame-retardant, the property of being "smoke-suppressant", i.e., the property of depressing the formation and/or the emission of the toxic smokes consequent to the heating and the thermal decomposition of polyurethane polymers. A further object of the present invention are the polyurethane polymers and the various polyurethane-based polymeric materials, such as fibres, coatings, elastomers and rigid and flexible foams, rendered self-extinguishing and endowed with properties of low emission of toxic smokes by means of said flame-retardant and smoke-suppressant composition.

As known, a polymeric material in general is endowed with self-extinguishing properties by means of the addition of special "flame-proofing" or "flame-retardant" agents which are precisely capable of supplying the polymeric substance with the required self-extinguishing characteristics.

Such flame-retardant agents (i.e., "flame-retardants") are constituted by halogenated organic substances, by metal-based compounds, such as, e.g., antimony trioxide, by phosphorus and phosphorus derivatives (such as, e.g., red phosphorus, ammonium polyphosphate, phosphoric esters), by nitrogen-containing organic compounds (such as, e.g., urea, dicyandiamide, melamine and/or melamine salts, cyanuric acid, and the like), and still others.

In order to reach the desired self-extinguishing features, even two or more different flame-retardants are used in mutual association, both in order to take advantage, in combination, of specific flame-retardant characteristics of the individual products, and in order to accomplish determined "synergistic" or "combined" effects.

Flame-retardant compositions known from the prior art are those based on phosphorus and nitrogen, comprising, e.g., as nitrogen-containing products, compounds selected from the group consisting of hydroxyalkyl derivatives of isocyanuric acid, in particular tris-(2-hydroxyethyl)-isocyanurate, melamine, cyanuric acid, melamine salts and the like, and, as phosphorus containing products, ammonium polyphosphate.

Such flame-retardant compositions are widely used and are particularly suitable in order to endow the polyolefinic polymers with self-extinguishment characteristics.

In case of polyurethane polymers, a serious drawback which occurs when such polymers are submitted to a heating to very high temperatures and, in particular, are exposed to the action of direct flames and the like, is, as known, the emission of highly toxic smokes, deriving from the thermal decomposition of the same polymer. As a consequence, the use of such materials, widely diffused in the sectors of furnishings, of transport, of the construction of structural parts, of floor fabrics, of upholstery and the like, is extremely risky and can cause severe damages in case of a fire, owing to the emission of the smokes deriving from the induced heating, even if the polymer was rendered self-extinguishing by means of the use of traditional flame-retardant products and therefore is not capable of feeding the flames and of supporting the fire.

The purpose of the present invention is of providing a flame-retardant composition for polyurethane polymers which simultaneously is also a smoke-suppressant one, which, i.e., is capable of "suppressing" or "depressing" the emission of noxious smokes deriving from the decomposition of the polyurethane materials when these latter are submitted to a heating at high temperatures and/or are exposed to the action of direct flames, and the like.

These and still other purposes, and relevant advantages, which are set forth by the following disclosure, are advantageously achieved by a flame-retardant composition for polyurethane polymers, for polyurethane-based copolymers, mixed polymers and polymeric materials, which composition, according to the present invention, comprises the following components:

A. an ammonium phosphate or one or more amine phosphate(s), or a mixture constituted by an ammonium phosphate and one or more amine phosphate(s);

B. a nitrogen-containing organic compound(s), or a mixture of two or more nitrogen-containing organic compounds selected from the group comprising urea, dicyandiamide, cyanuric acid, piperazine and piperazine derivatives, melamine, melamine cyanurate, melamine borate, melamine sulfate, a hydroxyalkyl derivative of isocyanuric acid of formula

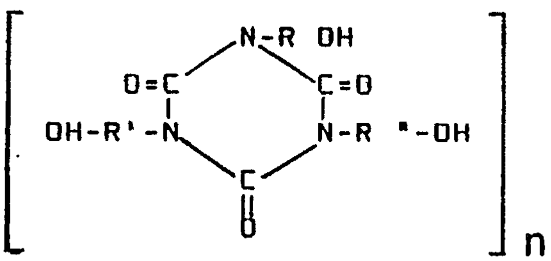

wherein R, R′ and R″ are alkyl radical equal to, or different, from each other, containing from 1 to 6 carbon atoms; and

C. magnesium hydroxide $Mg(OH)_2$ or aluminum hydroxide $Al(OH)_3$, or a mixture of both of them.

It has been seen that the composition according to the present invention, when is homogeneously and intimately incorporated in a polyurethane polymer in the form of a coating or of an either rigid or flexible foam, as well as in any other, normally used, forms, gives the same polymer high flame-retardant properties, and furthermore considerably reduces, in some cases down to practically negligible levels, the emission of noxious smokes when the polymer or the material, or the finished article manufactured from the polymer, is heated to high temperatures, and/or is placed into contact with direct flames or with other heat sources, such as electrical resistors, red-hot metal elements and the like, such as to cause the polymer to undergo thermal breakdown.

More particularly, said hydroxyalkyl-derivative of isocyanuric acid is constituted by tris-(2-hydroxyethyl)-isocyanurate and is used both in monomer form, and as a homopolymer, with n being a numeral comprised within the range of from 1 to 500.

Said ammonium phosphate preferably is in the form of a polyphosphate having the general formula $(NH_4)_{n+2}\ P_nO_{2n+1}$ wherein n is a numeral higher than 2, of a metaphosphate $(NH_4PO_3)_n$ and the like, and said amine phosphates are selected from the group consisting of dimethyl-ammonium phosphate, diethyl-ammonium phosphate, ethylene-diamine phosphate, melamine orthophosphate and melamine pyrophosphate.

Still according to the present invention, said ammonium and/or amine phosphates are also used in the form of particles microencapsulated (according to processes known from the prior art) in a water-repellant synthetic resin or the like, in particular when the composition according to the instant invention is destined to render self-extinguishing polyurethane materials destined to uses which require low water absorptions by the same materials, and when a high resistance to water extraction is anyway required.

The amounts and the mutual ratios of the A), B) and C) components to be incorporated in the polymer or in the polyurethane-based material in order to efficaciously endow it with self-extiguishing and smoke-suppressant characteristics, vary according to the type of polyurethane. In general, in order to achieve a satisfactory level of self-extinguishment, and a suitably low emission of smokes, in the polymer the following amounts, expressed as percentages by weight relatively to the polyurethane endowed with self-extinguishing characteristics, of the three components are incorporated:

A) ammonium phosphate and/or amine phosphates, from 1 to 40% by weight;

B) nitrogen-containing organic compound(s), from 1 to 40%;

C) magnesium hydroxide and/or aluminum hydroxide, from 1 to 40%.

The composition according to the instant finding, if referred to the total weight of the same composition, is constituted by the following percentages of the three components, by weight:

A) ammonium phosphate and/or amine phosphates, from 10 to 80%;

B) nitrogen-containing organic compound(s), from 10 to 80%;

C) magnesium hydroxide and/or aluminum hydroxide, from 10 to 80%.

The total amounts of the composition according to the present invention, to be incorporated into the polyurethane-based materials, are of the order of from 3 to 70% by weight (relatively to the total weight).

The flame-retardant/smoke-suppressant composition according to the present invention makes it possible stabilizing/antioxidant agents of known type, lubricants, dyes, foaming agents, inorganic fillers, mineral fibres, and the like, to be simultaneously used in the polymer.

The constituents of the flame-retardant/smoke-suppressant composition according to the present invention are incorporated in the polyurethanes according to known techniques, variable from case to case, according to the polyurethane type.

As known, polyurethanes are resins with an external appearance and characteristics which may be very variable, which are obtained by means of the condensation of a diisocyanate with a compound containing at least two activated hydrogen atoms, such as diols, diamines, bicarboxy acids, polyesters with free hydroxy groups, polyethers, and so forth. Toluene-diisocyanate and hexamethylene-diisocyanate are among the most frequently used diisocyanates.

From the reaction of diisocyanates with glycols, products are obtained, which can be used in the field of textile fibres, and from the reaction of said diisocyanate with polyols, resins are prepared, which are used in the field of paints, of adhesives,

of elastomers and of foamed materials.

The composition according to the present invention can be incorporated in the polymeric product, e.g., by adding the components of the same composition, either as individual compounds, or pre-mixed with one another, to the mixture of the diisocyanate with the polyol or the diamine during the reaction step, optionally together with other additives known from the prior art. Or, according to an alternative route, said components of the composition can be previously mixed with the diisocyanate or with the polyol, or the diamine, or they can be partially mixed with the diisocyanate and partially with the polyol or the diamine, in amounts and in mutual ratios which can vary from case to case, according to the chemical and physical compatibility of the individual constituents with one another.

In case of thermosetting polyurethane compositions constituted by prepolymers capped with blocked isocyanic groups and suitable chain extenders or cross-linking agents of diaminic character, the flame retardant/smoke suppressant composition according to the present invention is advantageously incorporated in said prepolymer, optionally together with pigments, stabilizer filters, antioxidants, foaming agents and further possible additives known from the prior art.

The invention according to the present invention can be better set forth and disclosed by the following example of practical embodiment thereof, supplied for merely exemplifying purposes, and which in no way shall be construed as being in any way limitative of the scope of protection of the same invention.

## Example

A mixture of polyol and toluene-diisocyanate is prepared in the ratios which are normally used in order to obtain polyurethanes for polyurethane foams production. The flame retardant/smoke suppressant composition according to the present invention in which the ratio of the A component, ammonium polyphosphate; to the B component, constituted by 50% by weight of a polymer of tris-(2-hydroxyethyl)-isocyanurate and by 50% by weight of melamine, isocyanurate; to the C component, aluminum hydroxide, is of 1:3:2, is added to the above said mixture in an amount of 30% by weight.

The so obtained product results to be flame-retarded, in conformity with Class B1 according to DIN 4102, also after that the specimens of the material are submitted to extraction with hot water. Furthermore, when said product was submitted to decomposition by means of the direct action of a free flame, a development of smoke was observed, according to ASTM E 662, whose amount was reduced by at least 50% relatively to the amount of smoke developed by a similar product obtained by means of the separate addition of only one of the individual components, i.e., of the A component or of the B component or of the C component in an amount of 30% by weight, or by means of the addition of binary combinations of said components i.e. , of A+C, or of B+C or of A+B.

Furthermore, according to the present invention, in order to facilitate the metering (absence of dusts) and the dispersion of the flame retardant/smoke suppressant composition in the polyurethane-based materials, the same composition can be concentrated at 10-50% in a polyol or in a polymeric substance compatible with the polyurethane to which it has to be added, as well as with further optional conventional additives, such as coadjuvants, dyes, lubricants, antistatic agents, stabilizers, foaming agents, inorganic fillers, and the like.

In other terms, in this way a "concentrate" of said flame retardant/smoke suppressant agent in a suitable "carrier" is formed, which is ready to be added to the polymers.

The invention, as hereinabove disclosed and exemplified, can be supplied with technically equivalent variants, all of which fall within the scope of protection of the same invention.

## Claims

1. Flame-retardant and smoke-suppressant composition for polyurethane polymers and for polyurethane-based polymeric materials, characterized in that it comprises the following components:

A) an ammonium phosphate or one or more amine phosphate(s), or a mixture constituted by an ammonium phosphate and one or more amine phosphate(s);

B) a nitrogen-containing organic compound, or a mixture of two or more nitrogen-containing organic compounds selected from the group comprising urea, dicyandiamide, cyanuric acid, piperazine and piperazine derivatives, melamine, melamine cyanurate, melamine borate, melamine sulfate, a hydroxyalkyl derivative of isocyanuric acid of formula

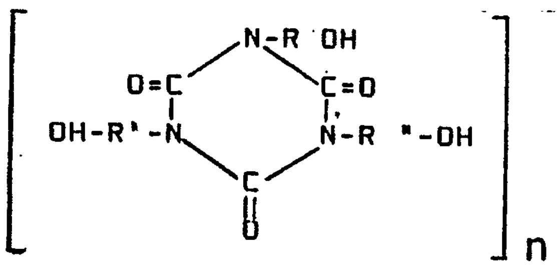

wherein R, $R'$ and $R''$ are alkyl radical equal to, or different, from each other, containing from 1 to 6 carbon atoms;

C) magnesium hydroxide $Mg(OH)_2$ or aluminum hydroxide $Al(OH)_3$, or a mixture of both of them.

2. Flame retardant / smoke suppressant composition according to claim 1, characterized in that said (B) component is tris-(2-hydroxyethyl)-isocyanurate and is used both in monomer form, and as a homopolymer, with n being a numeral comprised within the range of from 1 to 500.

3. Flame retardant/smoke suppressant composition according to claim 1, characterized in that said ammonium phosphate is in the form of a polyphosphate having the general formula $(NH_4)_{n+2}P_nO_{3n+1}$ wherein n is a numeral higher than 2, of a metaphosphate $(NH_4PO_3)_n$ and the like, and said amine phosphates are selected from the group consisting of dimethyl-ammonium phosphate, diethyl-ammonium phosphate, ethylene-diamine phosphate, melamine orthophosphate and melamine pyrophosphate.

4. Flame retardant/smoke suppressant composition according to claim 1, characterized in that said (A) component is in the form of particles microencapsulated in a synthetic resin of a type known from the prior art, compatible with the polyurethane formulations used.

5. Composition according to claim 1 characterized in that said flame retardant/smoke suppressant composition is constituted by 10 to 80% by weight of said ammonium phosphate and/or amine phosphates (the A component), from 10 to 80% by weight of said nitrogen-containing organic compounds (the B component)and from 10 to 80% by weight of magnesium hydroxide and/or aluminum hydroxide (the C component).

6. Composition according to claim 1, characterized in that said A, B and C components of said flame retardant/smoke suppressant composition are in mixture with from 10 to 50% by weight of a polyol or in a polymeric substance of the same nature of, or anyway compatible with, the polyurethane in which said composition is introduced, as well as with other additives such as various coadjuvants, dyes, antistatic lubricants, stabilizers and foaming agents, of types known from the prior art.

7. Flame retardant/smoke suppressant composition according to claim 1, characterized in that said composition is incorporated in said polyurethane polymer by adding the components of the same composition, either individually, or pre-mixed with one another, to the mixture of the diisocyanate with the polyol or the diamine during the reaction step, together with any further known additives.

8. Flame retardant/smoke suppressant composition according to claim 1, characterized in that said components of said composition are incorporated in the polyurethane polymer by being previously mixed with the diisocyanate, or with the polyol or the diamine, or partially with the diisocyanate and partially with the polyol or the diamine, according to the chemical and physical compatibility of the individual constituents with one another.

9. Flame retardant/smoke suppressant composition according to claim 1, characterized in that in case of thermosetting polyurethane compositions constituted by prepolymers capped with blocked isocyanic groups and by suitable chain extenders or cross-linking agents of diaminic character, said flame retardant/smoke suppressant composition is incorporated in said prepolymer.

10. Polyurethane polymers and polyurethane-based polymeric materials characterized in that they are endowed with self-extinguishing and smoke-suppressant characteristics by means of the flame retardant composition according to claim 1.

11. Polyurethane polymers and polyurethane-based polymeric materials according to claim 10, characterized in that they contain from 1 to 40% by weight of ammonium phosphate and/or amine phosphates selected from the group consisting of dimethyl-ammonium phosphate, diethyl-ammonium phosphate, ethylene-diamine phosphate, melamine orthophosphate and, melamine pyrophosphate (the A component), from 1 to 40% by weight of one or more nitrogen-containing organic compounds selected from the group consisting of urea, dicyandiamide, cyanuric acid, piperazine and piperazine derivatives, melamine, melamine cyanurate, melamine borate, melamine sulfate, a hydroxyalkyl derivative of isocyanuric acid of formula

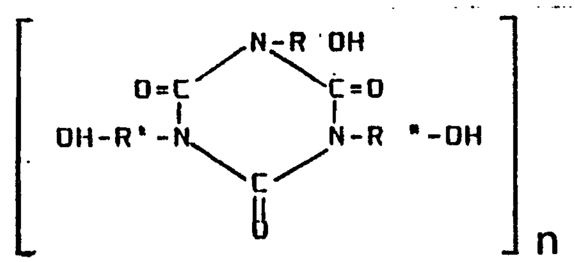

wherein R, $R'$ and $R''$ are alkyl radical equal to, or

different, from each other, containing from 1 to 6 carbon atoms (the B component); and from 1 to 40% by weight of magnesium hydroxide $Mg(OH)_2$ or of aluminum hydroxide $Al(OH)_3$, or of a mixture of both of said compounds (the C component).